# EUROPEAN PATENT APPLICATION

(11) **EP 0 945 480 A1**
(43) Date of publication of application: **29.09.1999**
(21) Application number: 97909569.2
(22) Date of filing: 22.10.1997
(51) Int. Cl.: C08J 5/18, B29C 41/12, B32B 27/30, C08L 27/12, B29K 27/12

(54) **FLUORINATED RESIN FILMS AND PRESSURE-SENSITIVE ADHESIVE SHEETS**

(30) Priority: 22.10.1996 JP 29940696
(71) Applicant: DAIKIN INDUSTRIES, LIMITED, Osaka-shi Osaka 530 (JP)
(72) Inventor: TSUDA, Nobuhiko, Daikin Industries, Ltd., Settu-shi, Osaka 566 (JP); IWAKIRI, Ryuji, Daikin Industries, Ltd., Settu-shi, Osaka 566 (JP); IMOTO, Katsuhiko, Daikin Industries, Ltd., Settu-shi, Osaka 566 (JP); NAGATO, Masaru, Daikin Industries, Ltd., Settu-shi, Osaka 566 (JP)
(74) Representative: Hubert, Philippe
(86) International application number: JP9703801
(87) International publication number: WO9817712

(57) **Abstract**

The present invention has its object to provide a synthetic resin film excellent in weather resistance and in dirt and stain removability and capable of being printed on the surface thereof without using any organic solvent in the stage of production thereof and with such processability as to give a thin film form, as well as an adhesive sheet in which said film is used.

The present invention is related to a fluorine-containing resin film made by the technique of casting and having modulus of elasticity of not less than 50 kg/mm² and an elongation of not less than 50%.

## Description

### TECHNICAL FIELD

The present invention relates to a fluorine-containing resin film excellent in weather resistance and in dirt and stain removability.

### BACKGROUND ART

Owing to their good processability, vinyl chloride resins, polyester resins, vinyl acetate resins and like synthetic resins are generally used in a wide variety of fields such as building materials for houses, outdoor buildings, signboards or billboards, display boards, and traffic signs. Among them, adhesive sheets produced by processing these synthetic resins into a film form, followed by further application of an adhesive are used as surface protecting films, marking films and the like in many fields.

When used outdoors, such synthetic resin films encounter problems. For instance, if the synthetic resin constituting them is poor in weather resistance, they may change in color or their colors fade with the lapse of time, whereby their functions as billboards, which are important from the product image viewpoint may be impaired or their beauties as house interiors may be worsened or the functions as traffic signs the colors of which are very important may be reduced, possibly increasing the possibility of traffic accidents. Another problem is that the plasticizers contained in some of these synthetic resins tend to bleed out and stain the surface.

For the purpose of improving the weather resistance, films made of fluorine-containing resins have been proposed. However, fluorine-containing resins generally have a high level of crystallinity and hardly flow in a hot melt state due to their high melting point or high molecular weight. Therefore, fluorine-containing resin films are produced by extrusion molding at a high temperature or by casting from a dispersion in an organic solvent.

By any of such techniques, it is difficult to efficiently manufacture thin fluorine-containing resin films having a thickness of not more than tens of micrometers.

For solving such problems, Japanese Kokoku Publication Hei-07-62079 proposes a technique of forming films by casting of an organic solvent solution of a solvent-soluble synthetic resin. The application of this technique is, however, limited to solvent-soluble synthetic resins alone, and the obtained films cannot fully meet the requirements concerning those performance characteristics required of marking films which should be hard and stretchable.

Furthermore, in the above technique, the use of an organic solvent, which is generally hazardous to human bodies, is essential, so that there arise working environment problems, including costs of removal and recovery of said solvent as well as safety problems.

In addition, because of the nonadhering, nonsticky properties characteristic of fluorine, it is very difficult to provide films formed from fluorine-containing resins with a decorative character by so-far known printing techniques such as offset printing and gravure printing, hence such films are not suited for general-purpose use.

### SUMMARY OF INVENTION

In view of the situation mentioned above, it is a primary object of the present invention to provide a synthetic resin film excellent in weather resistance and in dirt and stain removability and capable of being printed on the surface thereof without using any organic solvent in the stage of production thereof and with such processability as to give a thin film form, as well as an adhesive sheet in which said film is used.

The fluorine-containing resin film of the present invention is a fluorine-containing resin film produced by the technique of casting and showing modulus of elasticity of not less than 50 kg/mm² and an elongation of not less than 50%.

### DETAILED DESCRIPTION OF THE INVENTION

The technique of casting mentioned above is a technique comprising spreading a solution or dispersion of an appropriate resin in a liquid medium, for example water or an organic solvent, over a substrate and evaporating the liquid medium at room temperature or an elevated temperature to give a film. Thus, for example, there may be mentioned the technique comprising spreading a solution of the resin in an organic solvent over a substrate and evaporating said organic solvent and the technique comprising spreading an aqueous dispersion of the resin over a substrate and evaporating the aqueous medium.

The modulus of elasticity and elongation mentioned above are measured at room temperature around 25°C according to JIS K 6301. In making the above measurements, care should be taken so that the organic solvent or the like do not remain in the film, since, if the organic solvent or the like used in the step of casting remains in the film, the elongation may be high owing to the plasticizing effect just after film production but will be lost with the evaporation of the solvent or the like, with the result that the film can no more show the desired elongation but will undergo cracking or breaking.

If the above-mentioned modulus of elasticity is below 50 kg/mm², the dirt and stain removability of the film, or the removability of stain, will be low due to contaminating substances penetration into the film, for instance. If the above-mentioned elongation is less than 50%, film cracking or opacification or blushing may occur in the step of film producing and in the step of application of the adhesive sheet produced therefrom to a curved surface. The elongation should preferably be not less than 80%.

The fluorine-containing film of the present invention can be obtained by spreading aqueous dispersion of a fluorine-containing resin in an aqueous medium over a non-adhesive substrate, followed by drying.

The solid concentration of said aqueous dispersion of fluorine-containing resin is generally about 20 to 60% by weight, and the average size of particles is about 50 to 300 nm. Generally, said aqueous dispersion has a pH of 5 to 10.

The fluorine-containing resin film of the present invention can be obtained by the above-mentioned aqueous dispersion of fluorine-containing resin over a non-adhesive substrate, followed by drying. On that occasion, if necessary, pigments, pigment dispersing agents, glass beads, resin beads, high-boiling organic solvents as film-forming agents, antifreezing agents, rheorogy modifiers, ultarviolet absorbers, antioxidants, biocides and antifungal agents may be incorporated in the above-mentioned aqueous dispersion of fluorine-containing resin. Furthermore, it is preferred that surfactant-type antistatic agents, electroconductive fillers-type antistatic agents or the like be incorporated in said dispersion so that the possible reduction in processability due to generation of static electricity in the step of film formation can be prevented.

The substrate mentioned above is not limited to any particular species but includes, for example, glass sheets, metal sheets, synthetic resin sheets, and other substrates having a smooth surface. The method of spreading the aqueous dispersion of fluorine-containing resin over such substrate is not limited to any particular one but use may preferably be made of, for example, bar coaters, flow coaters, coil coaters, curtain coaters, air spray coaters and the like.

The method of drying the aqueous dispersion of fluorine-containing resin spread over said substrate is not limited to any particular one but there may be mentioned, for example, the method comprising spreading the dispersion over a substrate and then evaporating water and other volatile matter at room temperature, and the method comprising applying the aqueous dispersion of fluorine-containing resin to a preheated substrate in the per se known manner and then drying the same by feeding air at a temperature of 30 to 200°C over the same for about 5 seconds to 24 hours in a heating oven.

For carrying out the above procedure, the method comprising the steps of application, drying, cooling and film reel up continuously in a continuous line is also preferred. On that occasion, it is preferred that the drying conditions be set so that not only the water contained in the aqueous dispersion of fluorine-containing resin but also the high-boiling organic solvent used as a plasticizer can be evaporated to a level of not higher than 0.5% by weight in the coat film. The presence of the residual organic solvent is undesirable since it causes film tacking and reductions in block resistance, and lowers the handling properties and dirt and stain removability.

The method of peeling the film-shaped article dried on the substrate from said substrate is not limited to any particular one but any of ordinary mechanical techniques can appropriately be selected and applied.

The fluorine-containing resin film of the present invention is prepared by drying an fluorine-containing resin dispersion comprising the resin dispersed in an aqueous medium. Said aqueous dispersion of fluorine-containing resin has a fundamental feature such that the resin is dispersed in an aqueous medium. Said aqueous medium is not limited to any particular species but includes water supplemented with an additive(s), a solvent(s) and/or the like to be mentioned specifically hereinafter.

The resin dispersed in said aqueous medium is a fluorine-containing resin and some other resin or resins. In the present specification, said fluorine-containing resin and said other resin or resins are collectively referred to as

The resins to be dispersed in said aqueous medium are roughly classified into two categories, namely (1) a fluorine-containing resin comprising a copolymer of a fluoroolefin and a comonomer or comonomers copolymerizable therewith and (2) a fluorine-containing composite resin composed of a fluoroolefin polymer resin and some other polymer or polymers. In the present specification, said resins (1) and (2) are collectively referred to as "resins".

One of the resins of the present invention is (1) a fluorine-containing resin comprising a copolymer of a fluoroolefin and a monomer copolymerizable therewith.

The fluoroolefin mentioned above is not limited to any particular species but includes fluoroolefins containing about 2 to 4 carbon atoms, such as vinyl fluoride (VF), vinylidene fluoride (VdF), tetrafluoroethylene (TFE), chlorotrifluoroethylene (CTFE), hexafluoropropylene (HFP), and trifluoroethylene (TrFE).

As the monomers copolymerizable with the above fluoroolefin, there may be mentioned, for example, olefins such as ethylene, propylene and isobutylene; vinyl ethers such as ethyl vinyl ether (EVE), cyclohexyl vinyl ether (CHVE), hydroxybutyl vinyl ether (HBVE), butyl vinyl ether, isobutyl vinyl ether, methyl vinyl ether, and polyoxyethylene vinyl ether; alkenyl ethers such as polyoxyethylene allyl ether, ethyl allyl ether, hydroxyethyl allyl ether, allyl alcohol, and allyl ether; vinyl esters such as vinyl acetate, vinyl lactate, vinyl butyrate, vinyl pivalate, vinyl benzoate, VEOVA 9 (product of Shell), and VEOVA 10 (product of Shell); ethylenically unsaturated carboxylic acids such as itaconic anhydride, succinic anhydride, and crotonic acid; and the like.

The copolymer of said fluoroolefin and a monomer or monomers copolymerizable therewith includes, but is not limited to, CTFE/vinyl ether copolymers, CTFE/vinyl ester copolymers, TFE/vinyl ether copolymers, TFE/vinyl ester copolymers, TFE/ethylene copolymers, TFE/propylene copolymers, CTFE/ethylene copolymers, CTFE/propylene copolymers, CTFE/ethylene/vinyl ether copolymers, CTFE/ethylene/vinyl ester copolymers, and modifications of these copolymers as modified with a small amount of a copolymerizable monomer(s).

The above-mentioned fluorine-containing resin occurs, in the aqueous medium, as fluorine-containing resin particles.

The aqueous dispersion of fluorine-containing resin mentioned above can be prepared, for example, by the phase conversion method which comprises dispersing the resin (1) mentioned above as obtained by polymerization in a solvent, for instance, in water in the presence of an emulsifying agent and then distilling off the solvent, or by the method which comprises carrying out emulsion polymerization of the resin (1) in an aqueous medium. For reducing the amount of solvent and simplifying the process, the method which comprises carrying out emulsion polymerization in an aqueous medium is preferred.

The above emulsion polymerization can be conducted in the same manner as in ordinary emulsion polymerizations, for example by reacting a fluoroolefin and a monomer or monomers copolymerizable with the fluoroolefin at a temperature of 10 to 90°C for 0.5 to 40 hours in an aqueous medium in a closed vessel in the presence of a surfactant, polymerization initiator, and chain transfer agent, optionally in the presence of a chelating agent, pH adjusting agent, and/or solvent, among others.

The surfactant mentioned above may be anionic, nonionic or a combination of anionic and nonionic. Amphoteric surfactants may also be used in some instances.

As the anionic surfactant, there may be mentioned, for example, hydrocarbon-derived anionic surfactants such as higher alcohol sulfate esters, alkylsulfonic acid sodium salts, alkylbenzenesulfonic acid sodium salts, sulfosuccinic acid dialkyl ester sodium salts, and alkyldiphenyl ether disulfonic acid sodium salts, as well as fluorine-containing anionic surfactants such as fluoroalkylcarboxylic acid salts, fluoroalkylsulfonic acid salts, and fluoroalkyl sulfate ester salts.

As the nonionic surfactant, there may be mentioned, for example, polyoxyethylene alkyl ethers, polyoxyethylene alkylphenyl ethers, polyoxyethylene alkyl esters, polyoxyethylene alkylphenyl esters, sorbitan alkyl esters, glycerol esters, and derivatives thereof.

As the amphoteric surfactant, there may be mentioned, for example, laurylbetaine and the like.

The so-called reactive emulsifier or the like may be used as said surfactant, and such reactive emulsifier may be used in combination with the emulsifier mentioned above.

The polymerization initiator to be used in the emulsion polymerization mentioned above is not limited to any particular species provided that it generates radicals available for the free radical reaction in the aqueous medium within the temperature range of 10 to 90°C. In some instances, said initiator may be used in combination with a reducing agent. As such, there may be mentioned generally water-soluble polymerization initiators such as persulfuric acid salts and hydrogen peroxide, and reducing agents such as sodium pyrosulfite, sodium hydrogen sulfite, sodium L-ascorbate, and Rongalite, as well as oil-soluble polymerization initiators such as diisopropyl peroxydicarbonate (IPP), benzoyl peroxide, dibutyl peroxide and azobisisobutyronitrile (AIBN).

The polymerization initiator is used generally in an amount of 0.05 to 2.0 parts by weight per 100 parts by weight of the radical-polymerizable unsaturated monomers.

The chain transfer agent to be used in the above emulsion polymerization includes, among others, halogenated hydrocarbons such as chloroform and carbon tetrachloride, and mercaptans such as n-dodecylmercaptan, tert-dodecylmercaptan and n-octylmercaptan. The chain transfer agent is used generally in an amount of 0 to 5.0 parts by weight per 100 parts by weight of the radical-polymerizable unsaturated monomers.

The solvent is used in an amount of not more than 20% by weight within such limits that the workability, safety from disasters, environmental safety and process safety will not be impaired. As the solvent, there may be mentioned, for example, methyl ethyl ketone, acetone, trichlorotrifluoroethane, methyl isobutyl ketone, cyclohexanone, methanol, ethanol, propanol, butanol, ethyl cellosolve, butyl cellosolve, methyl carbitol, ethyl carbitol, butyl carbitol, dioxane, butyl carbitol acetate, thexanol, ethyl acetate and butyl acetate.

The addition of such solvent may result in an improvement in the swellability of the radical-polymerizable unsaturated monomer or monomers to fluorine-containing resin particles in some instances.

Another resin species to be used in the practice of the present invention is (2) a fluorine-containing composite resin comprising a resin composed of fluoroolefin polymer and some other polymer or polymers. Said other polymer is not limited to any particular species but is preferably a polymer of a radical-polymerizable unsaturated monomer or monomers. The fluoroolefin copolymer is dispersed in particulate form in the aqueous medium and, when a fluorine-containing composite resin is formed by the radical-polymerizable unsaturated monomer(s), the polymerization is carried out in the manner of the so-called seed polymerization. In the present specification, the term "seed polymerization" means the polymerization reaction with the other monomer(s) in the presence of resin particles in an aqueous medium. Therefore, the fluorine-containing composite resin mentioned above means the seed polymer after said seed polymerization, and the resin particles mentioned above means seed particles in the seed polymerization.

Preferred as said fluoroolefin polymer are VdF polymers, such as VdF homopolymers, VdF/TFE copolymers, VdF/HFP copolymers, VdF/CTFE copolymers, VdF/TFE/CTFE copolymers, and VdF/TFE/HFP copolymers.

When the fluoroolefin polymer mentioned above is a VdF-based polymer, said fluorine-containing composite resin is herein referred to as VdF-based composite resin.

Preferred as the polymer constituting the seed particles mentioned above are VdF-based copolymers, more preferably VdF-based copolymers with a VdF content of not less than 70 mole percent. When the VdF content is 70% or more, the compatibility of the seed particles with the polymer derived from the radical-polymerizable unsaturated monomer(s) is improved, and the films (cast films) obtained by drying emulsion layers can have good characteristics due to the compatibility, for example good transparency and mechanical characteristics.

The average diameter of said seed particles is closely related with the average diameter of the fluorine-containing composite resin after seed polymerization. For obtaining a fluorine-containing composite resin having an average particle size of 50 to 300 nm after seed polymerization, it is preferred that the average seed particle size is 40 to 290

The polymer constituting said seed particles can be obtained by ordinary emulsion polymerization. For example, it can be prepared by emulsion polymerizing a fluoroolefin-containing monomer mixture in the presence of 0.01 to 1.0% by weight of a fluorine-containing reactive emulsifier having a hydrophilic site, and 0 to 1.0% by weight, relative to water, of a fluorine-containing emulsifier.

It can also be prepared by emulsion polymerizing a fluoroolefin-containing monomer mixture in the presence of not more than 1.0% by weight, preferably not more than 0.5% by weight, more preferably not more than 0.2% by weight (the lower limit being generally 0.01% by weight), relative to water, of a fluorine-containing surfactant and 0.001 to 0.1% by weight, preferably 0.01 to 0.05% by weight, relative to water, of a fluorine-free nonionic surfactant. The aqueous dispersion obtained by either of these methods can stably contain seed particles with an average size of not more than 0.2 µm in a concentration as high as 30 to 50% by weight.

As the above-mentioned fluorine-containing reactive emulsifier having a hydrophilic site, there may be mentioned, for example, those having the structure CF₂=CF-(CF₂CFX)ₙY (wherein X represents F or CF₃, Y represents SO₃M or COOM (M represents hydrogen atom, amine, ammonium or alkali metal) and n represents an integer), CF₂=CF-O(CFX)ₙY (wherein X, Y and n are as defined above), CH₂=CF-CF₂-O(CF(CF₃)CF₂O)ₙ-CF(CF₃)Y (wherein Y and n represent as defined above), or CF₂=CF-CF₂-O(CF(CF₃)CF₂O)ₙ-CF(CF₃)Y (wherein Y and n represent as defined above). Those in which n is within the range of 0 to 3 are preferred from the viewpoint of solubility in water and surface activity.

More specifically, those having the structure CF₂=CF-CF₂-O(CF(CF₃)CF₂O)ₙ-CF(CF₃)COOH in which n is 0 to 2 are preferred.

The polymerization temperature is 20 to 120°C, preferably 30 to 70°C. At a polymerization temperature below 20°C, the stability of the resulting latex will generally be low. At a polymerization temperature higher than 120°C, the polymerization rate tends to decrease due to chain transfer. The polymerization is generally carried out under pressurization of 1.0 to 50 kgf/cm² (gauge pressure) with heating for 5 to 100 hours, although optimal conditions may vary depending on the desired polymer species.

As the fluorine-containing emulsifier to be used in the above emulsion polymerization of seed particles, there may be mentioned mixture of one or two more compounds containing a fluorine atom or atoms in their structure and having surface activity. For example, there may be mentioned acid of the formula X(CF₂)ₙCOOH (wherein n represents an integer of 6 to 20 and X represents F or hydrogen atom) and alkali metal salts, ammonium salts, amine salts or quaternary ammonium salts thereof; and acids of the formula Y(CH₂CF₂)ₘCOOH (wherein m represents an integer of 6 to 13 and Y represents F or chlorine atom) and alkali metal salts, ammonium salts, amine salts or quaternary ammonium salts thereof. More specifically, there may be mentioned perfluorooctanoic acid ammonium salt, perfluorononanoic acid ammonium salt and the like. Other fluorine-containing surfactants may also be used.

In the emulsion polymerization for obtaining seed particles, a small amount of a fluorine-free nonionic surfactant may be used in the presence of a fluorine-containing surfactant. As typical examples thereof, there may be mentioned polyoxyethylene alkyl ethers, polyoxyethylene alkylphenyl ethers, polyoxyethylene alkyl esters, sorbitan alkyl esters, polyoxyethylenesorbitan alkyl esters, glycerol esters, and derivatives thereof.

More specifically, the polyoxyethylene alkyl ethers include polyoxyethylene lauryl ether, polyoxyethylene cetyl ether, polyoxyethylene stearyl ether, polyoxyethylene oleyl ether, polyoxyethylene behenyl ether, etc., the polyoxyethylene alkylphenyl ethers include polyoxyethylene nonylphenyl ether, polyoxyethylene octylphenyl ether, etc., the polyoxyethylene alkyl esters include polyethylene glycol monolaurate, polyethylene glycol monooleate, polyethylene glycol monostearate, etc., the sorbitan alkyl esters include polyoxyethylenesorbitan monolaurate, polyoxyethylenesorbitan monopalmitate, polyoxyethylenesorbitan monostearate, polyoxyethylenesorbitan monooleate etc., and the glycerol esters include glycerol monomyristate, glycerol monostearate, glycerol monooleate, etc.

As the derivatives of these, there may be mentioned polyoxyethylene alkylamines, polyoxyethylene alkylphenylformaldehyde condensates, polyoxyethylene alkyl ether phosphate salts and the like. Particularly preferred are polyoxyethylene alkyl ethers and polyoxyethylene alkyl esters having an HLB value of 10 to 18, more specifically polyoxyethylene lauryl ether (EO: 5 to 20 (EO number representing the number of ethylene oxide units)), and polyethylene glycol monostearate (EO: 6 to 10).

As the other polymer in the fluorine-containing composite resin (2) comprising a resin composed of fluoroolefin copolymer and some other polymer or polymers, there may be mentioned those polymers mentioned above as derived from a radical-polymerizable unsaturated monomer composition. The radical-polymerizable unsaturated monomer is not limited to any particular species but includes, among others, acrylic acid alkyl esters in which the alkyl group contains 1 to 18 carbon atoms, methacrylic acid alkyl esters in which the alkyl group contains 1 to 18 carbon atoms, and monomers having an ethylenically unsaturated unit and copolymerizable therewith.

As said acrylic acid alkyl esters in which the alkyl group contains 1 to 18 carbon atoms, there may be mentioned, for example, methyl acrylate, ethyl acrylate, n-propyl acrylate, i-propyl acrylate, n-butyl acrylate, i-butyl acrylate, t-butyl acrylate, 2-ethylhexyl acrylate, lauryl acrylate, etc.

As said methacrylic acid alkyl esters in which the alkyl group contains 1 to 18 carbon atoms, there may be mentioned, for example, methyl methacrylate, ethyl methacrylate, n-propyl methacrylate, i-propyl methacrylate, n-butyl methacrylate, i-butyl methacrylate, t-butyl methacrylate, 2-ethylhexyl methacrylate, cyclohexyl methacrylate, n-hexyl methacrylate, t-butylcyclohexyl methacrylate, stearyl methacrylate, lauryl methacrylate, etc.

For improving the solvent resistance and water resistance, a polyfunctional monomer such as ethylene glycol dimethacrylate or propylene glycol dimethacrylate may be copolymerized.

As the monomer having an ethylenically unsaturated unit and copolymerizable with said acrylic acid esters and/or methacrylic acid esters, there may be mentioned the following compounds (I) and (II), for instance.
(I) Reactive functional group-containing monomers, for example, ethylenically unsaturated carboxylic acids such as acrylic acid, methacrylic acid, maleic acid, itaconic anhydride, succinic anhydride, crotonic acid, etc.; amide compounds such as acrylamide, methacrylamide, N-methylacrylamide, N-methylolacrylamide, N-butoxymethylacrylamide, N-methylolmethacrylamide, N-methylmethacrylamide, N-butoxymethylmethacrylamide, etc.; hydroxyl-containing monomers such as hydroxyethyl acrylate, hydroxyethyl methacrylate, hydroxypropylacrylate, hydroxypropyl methacrylate, etc.; epoxy-containing monomers such as glycidyl acrylate, glycidyl methacrylate, etc.; silanol group-containing monomers such as γ-trimethoxysilane methacrylate, γ -triethoxysilane methacrylate, etc.; and aldehyde group-containing monomers such as acrolein etc.
(II) Other vinyl compounds, for example α-olefins such as ethylene, propylene, isobutylene, etc.; vinyl ethers such as ethyl vinyl ether (EVE), cyclohexyl vinyl ether (CHEV), hydroxybutyl vinyl ether (HBVE), butyl vinyl ether, isobutyl vinyl ether, methyl vinyl ether, polyoxyethylene vinyl ether, etc.; other alkenyl compounds such as polyoxyethylene allyl ether, ethyl allyl ether, hydroxyethyl allyl ether, allyl alcohol, allyl ether, etc.; vinyl esters such as vinyl acetate, vinyl lactate, vinyl butyrate, vinyl pivalate, vinyl benzoate, VEOVA 9, VEOVA 10 (products of Shell), etc.; ethylenically unsaturated carboxylic acids such as itaconic anhydride, succinic anhydride, crotonic acid, etc.; aromatic vinyl compounds such as styrene, α-methylstyrene, p-tert-butylstyrene, etc.; acrylonitrile and so forth.

Compounds containing, within the molecule thereof, a low molecular weight polymer or oligomer having a hydrophilic site or sites may also be used as the monomers having ethylenically unsaturated bonds and copolymerizable with the above-mentioned acrylic acid esters and methacrylic acid esters. The hydrophilic site means a site having a hydrophilic group or hydrophilic bonding, or a site having both of these combinedly. The hydrophilic group may be ionic, nonionic or amphoteric, or a combination of these. Nonionic and anionic hydrophilic groups are preferred, however. Known reactive emulsifiers may also be used as such compounds.

As the monomers or reactive emulsifiers copolymerized with the acrylic acid esters and/or methacrylic acid esters mentioned above and having ethylenically unsaturated bond(s), there may be mentioned, for example, polyethylene glycol methacrylate, polypropylene glycol methacrylate, methoxypolyethylene glycol methacrylate, polyethylene glycol acrylate, polypropylene glycol acrylate, methoxypolyethylene glycol acrylate, polyethylene glycol allyl ether, methoxypolyethylene glycol allyl ether, polyethylene glycol-polypropylene glycol monomethacrylate, polyethylene glycol-polytetramethylene glycol monomethacrylate, polyoxyethylene alkylallylphenyl ethers, polyoxyethylene alkylallylphenyl ether sulfuric acid salts, styrenesulfonic acid salts, allyl alkylsulfonic acid salts, polyethylene glycol methacrylate sulfuric acid salts, alkyl allyl sulfosuccinic acid salts, bis(polyoxyethylene-polycyclic phenyl ether)-methacrylated sulfuric acid ester salts, polyoxyethylene alkylphenyl ether acrylate esters, methacryloyloxypolyoxyalkylene sulfuric acid ester salts, methacryloyloxyalkylene sulfuric acid ester salts, polyoxyethylene vinyl ether, polyoxyethylene vinyl esters, etc.

In the practice of the invention, when the above radical-polymerizable unsaturated monomer or monomers are subjected to seed polymerization in the presence of fluorine-containing resin particles, the radical-polymerizable unsaturated monomer(s) swells out to the fluorine-containing resin and, at this time point, the polymerization mixture takes the form of an aqueous dispersion of the fluorine-containing copolymer with the radical-polymerizable unsaturated monomer(s) uniformly dissolved therein. Then, upon addition of the polymerization initiator, the radical-polymerizable unsaturated monomer or monomers polymerize, whereby compatible particles with entangled molecular chains are formed. When a polyfunctional radical-polymerizable unsaturated monomer is used, an interpenetrated network structure (IPN) can be formed. Said polyfunctional radical-polymerizable unsaturated monomer is, for example, monoglycol dimethacrylate or diglycol dimethacrylate.

The seed polymerization of the above-mentioned radical-polymerizable unsaturated monomer(s) can be effected in a per se known manner, for example by charging the radical-polymerizable unsaturated monomer(a) all at one into the reaction system in the presence of fluorine-containing resin particles, or by charging a part of the radical-polymerizable unsaturated monomer(s) and, after reacting the same, charging the remaining portion continuously or portionwise, or by charging the whole amount of the radical-polymerizable unsaturated monomer(s) continuously. The seed polymerization conditions are the same as in ordinary emulsion polymerizations, and the polymerization can be carried out, for example by adding a surfactant, polymerization initiator, chain transfer agent and, optionally, a chelating agent, pH adjusting agent and solvent to an aqueous medium containing the fluorine-containing resin particles and allowing the reaction to proceed at a temperature of 10 to 90°C for 0.5 to 6 hours.

The surfactants mentioned above may be anionic, nonionic or a combination of anionic and nonionic. Amphoteric surfactants may also be used in some instances.

As the anionic surfactants, there may be mentioned, for example, hydrocarbon-derived anionic surfactants such as higher alcohol sulfate esters, alkylsulfonic acid sodium salts, alkylbenzenesulfonic acid sodium salts, dialkylsulfonyl succinate sodium salts, and alkyldiphenyl ether disulfonic acid sodium salts, as well as fluorine-containing anionic surfactants such as fluoroalkylcarboxylic acid salts, fluoroalkylsulfonic acid salts, and fluoroalkyl sulfate ester salts.

As the nonionic surfactants, there may be mentioned, for example, polyoxyethylene alkyl ethers, polyoxyethylene alkylphenyl ethers, polyoxyethylene alkyl esters, polyoxyethylene alkylphenyl esters, sorbitan alkyl esters, glycerol esters, and derivatives thereof.

As the amphoteric surfactants, there may be mentioned, for example, laurylbetaine and the like.

The so-called reactive emulsifier or the like which can be copolymerized with the radical-polymerizable unsaturated monomer(s) may be used as said surfactant, and such reactive emulsifier may be used in combination with the emulsifier mentioned above.

The above-mentioned surfactants are used generally in an amount of 0.05 to 5.0 parts by weight per 100 parts by weight of the radical-polymerizable unsaturated monomer(s).

The polymerization initiator to be used in the seed polymerization mentioned above is not limited to any particular species provided that it generates radicals available for the free radical reaction in the aqueous medium within the temperature range of 20 to 90°C. In some instances, said initiator may be used in combination with a reducing agent. As such, there may be mentioned generally water-soluble polymerization initiators such as persulfuric acid salts and hydrogen peroxide, and reducing agents such as sodium pyrosulfite, sodium hydrogen sulfite, sodium L-ascorbate, and Rongalite, as well as oil-soluble polymerization initiators such as diisopropyl peroxydicarbonate (IPP), benzoyl peroxide, dibutyl peroxide and azobisisobutyronitrile (AIBN).

The polymerization initiator is used generally in an amount of 0.05 to 2.0 parts by weight per 100 parts by weight of the radical-polymerizable unsaturated monomer(s).

The chain transfer agent to be used in the above seed polymerization includes, among others, halogenated hydrocarbons such as chloroform and carbon tetrachloride, and mercaptans such as n-dodecylmercaptan, tert-dodecylmercaptan and n-octylmercaptan. The chain transfer agent is used generally in an amount of 0 to 5.0 parts by weight per 100 parts by weight of the radical-polymerizable unsaturated monomer or monomers.

The solvent is used in an amount of not more than 20% by weight within such limits that the workability, safety from disasters, environmental safety and process safety will not be impaired. As the solvent, there may be mentioned, for example, methyl ethyl ketone, acetone, trichlorotrifluoroethane, methyl isobutyl ketone, cyclohexanone, methanol, ethanol, propanol, butanol, ethyl cellosolve, butyl cellosolve, methyl carbitol, ethyl carbitol, butyl carbitol, dioxane, butyl carbitol acetate, thexanol, ethyl acetate and butyl acetate.

The addition of such solvent may result in an improvement in the swellability of the radical-polymerizable unsaturated monomer or monomers to fluorine-containing resin particles in some instances.

In the practice of the present invention, the particle size of the fluorine-containing resin particles in the aqueous dispersion is preferably 50 to 300 nm, more preferably 50 to 200 nm.

When said particle size is less than 50 nm, the aqueous dispersion of fluorine-containing resin will have a markedly increased viscosity within the practical concentration range of 30% or more, causing troubles in the process of paint composition preparation. When said particle size is above 300 nm, the resulting aqueous dispersion of fluorine-containing resin will be poor in precipitation stability and, even if the resin constitution is the same, an increase in lowest film-forming temperature of the aqueous dispersion of fluorine-containing resin will result and, in addition, films prepared from such aqueous dispersion of fluorine-containing resin are unsatisfactory in leveling property, hence it is difficult to obtain coat films with high gloss.

The adhesive sheet of the present invention has an adhesive layer on at least one side of the fluorine-containing resin film mentioned above.

Said sheet may have an adhesive layer on one side alone or on both sides.

Said adhesive layer comprises an adhesive formed in a layer form and generally can be provided on one side or both sides of the fluorine-containing resin film mentioned above by applying said adhesive in the manner of coating. Said adhesive is not limited to any particular species but includes thermoplastic, pressure-sensitive, curable and other adhesives and thus, for example, rosins, modified rosins, polyterpene resins, terpene-phenol resins, pertroleum resins, hydrogenated alicyclic petroleum resins, acrylic resins, natural rubbers, styrene-butadiene rubbers, silicone rubbers and the like are preferred.

The method of applying the above adhesive is not limited any particular one. Thus, the adhesive can be applied by using a suitable coater selected from among bar coaters, flow coaters, coil coaters, curtain coaters, air spray guns and so on.

In the step of forming said adhesive layer, it is preferred, from the viewpoint of handling properties of the adhesive sheet of the present invention, that a release paper or the like be provided on the surface of the adhesive layer to thereby protect said layer until the time of application of the film. Said release paper is not limited to any particular species but preferably includes, for example coated paper species impregnated with a fluorine-containing, silicone-based, or some other release agent.

In an embodiment of the adhesive sheet of the present invention, said adhesive sheet can suitably be colored by dispersing one or more pigments in the fluorine-containing resin film constituting said adhesive sheet. As said pigments, there may be mentioned those known pigments which are generally used in paint compositions and those aqueous dispersion pastes of such known pigments which are commercially available as processed pigment products. As white pigments, for instance, there may be mentioned titanium oxide, extender pigments, clays, calcium sulfate, etc. and, as color pigments, there may be mentioned inorganic pigments and fired inorganic pigments, such as carbon, metal oxides, etc., and organic pigments such as phthalocyanines, as well as aqueous dispersion pastes thereof.

As another embodiment of the adhesive sheet of the present invention, there may be mentioned an adhesive sheet for decorative use which has a design printed on the surface. The method of printing is not limited to any particular technique but includes, among others, such known methods as seal printing, offset printing, silk screening printing and so on. Said adhesive sheet for decorative use can be applied, for example as a sheet for house interior decoration, utilizing the excellent feel thereof as a sheet for interior decoration.

One of the most remarkable modes of application of the adhesive sheet of the present invention is the use thereof as a marking film. Marking films are generally and widely used as outdoor signboards, outdoor markers or signs, indoor markers or signs, emergency signs, traffic signs and so forth. The marking film where the adhesive sheet of the present invention is utilized is excellent in weather resistance and stain removablity. It can be produced in a thin film form and has very good utility characteristics.

The form of application of the adhesive sheet of the present invention is not limited to the marking film mentioned above. Other application forms of the adhesive sheet of the invention include, for example, films for food packaging, films for drug packaging, films for vinyl houses for agricultural use, films for roof waterproofing, stickers and seals for sales promotion, seals, outdoor sign stickers, protective films for signboards, etc., as well as surface protecting films and strippable films to be used for the purpose of storing, rust prevention and damage protection of metallic materials and metallic products.

In addition to those mentioned above, there may be mentioned other application forms of the adhesive sheet of the present invention such as, for example, reflecting sheets, surface protecting sheets, exterior decoration sheets and interior decoration sheets, as roughly classified. Said reflecting sheet includes sheets prepared by embedding microbeads in a substrate which, when light impinges thereon during night hours, reflect back the light toward the source of light, such as the sheets for road signs, curb structures, vehicles such as automobiles, crossings, lower parts of utility poles, hydrant signs, signboards, decorations, artificial flowers, wall paintings, reflecting safety signs defined in JIS Z 9105, mine safety signs defined in JIS M 700, clothes, helmets and the like.

The surface protecting sheets mentioned above can be used, for example, for protecting metal sheets such as stainless steel, aluminum and colored steel sheets, glasses, special polywoods, synthetic resins such as acrylics, polystyrene, polycarbonate and polyethersulfone.

As the above-mentioned sheets for interior decoration, there may be mentioned, for example, adhesive sheets to be applied to walls and ceilings.

### BEST MODES FOR CARRYING OUT THE INVENTION

The following synthesis examples and working examples are further illustrative of the present invention. They are, however, by no means limitative of the scope of the present invention.

### Synthesis Example 1

A one-liter pressure reaction vessel equipped with a stirrer was charged with 500 ml of deionized water, 0.5 g of ammonium perfluorooctanoate and 0.05 g of MYS 40 (product of Nikko Chemicals). The dissolved air was removed by repeating the procedure comprising introduction of nitrogen under pressure and degassing. Then, the vessel inside was pressurized to 10 kgf/cm² at 60°C with a monomer mixture composed of VdF/TFE/CTFE (mole percent ratio: 74/14/12). Ammonium persulfate (0.2 g) was charged and the monomer mixture composed of VdF/TFE/CTFE (mole percent ratio: 74/14/12) was fed continously in a manner such that the vessel inside pressure could be maintained at a constant level of 10 kgf/cm², to thereby allow the reaction to proceed for 40 hours. Thereafter, the vessel inside was returned to ordinary temperature and ordinary pressure and the reaction was completed.

This aqueous dispersion was adjusted to pH 6.5 with 5% sodium hydrogen carbonate. The aqueous dispersion obtained had a solids concentration of 40% and an average particle size of 120 nm. The solids concentration was expressed in terms of the percentage of the weight of the solids obtained by drying in a vacuum dryer at 150°C for an hour relative to the weight of the aqueous dispersion before drying. The average particle size was measured using a laser beam scattering type particle size measuring apparatus (Otsuka Denshi model ELS-3000).

### Example 1

A 200-ml four-necked flask equipped with a stirrer, condenser and thermometer was charged with 100 g of the aqueous dispersion of fluorine-containing resin obtained in Synthesis Example 1 and then 1.5 g of the reactive emulsifier Eleminol JS2 (product of Sanyo Chemical Industries) was added. The flask contents were heated on a water bath with stirring and, when the flask temperature reached 80°C, an emulsion of a mixture of 17.0 g of methyl methacrylate (MMA) and 1.7 g of methoxypolyethylene glycol methacrylate RMA 450M (product of Nippon Nyukazai) in 10 g of a 0.5% by weight aqueous solution of JS2 was added dropwise over 1 hour. Immediately thereafter, 1 ml of a 2% by weight aqueous solution of ammonium persulfate was added for initiating the reaction. At 3 hours after initiation of the reaction, the flask inside temperature was raised to 85°C, and that temperature was maintained for 1 hour and then cooled and, after pH adjustment to 7 with aqueous ammonia, the reaction mixture was filtered through a 300-mesh wire gauze to give a pale white aqueous dispersion of fluorine-containing resin. The solids concentration was 46% and the average particle size was 160 nm.

Attempts were made in vain to determine the intrinsic viscosity of the thus-obtained resin at 30°C by drying the same and dissolving the obtained resin in THF, since the resin obtained was insoluble in THF. This aqueous dispersion was cast into a 10 cm dish so as to give a dry film thickness of 200 µm, and dried at 50°C for 2 hours. The mechanical characteristics of the dry film obtained were determined in terms of modulus of elasticity and elongation at break according to JIS K 6301. The film obtained showed an modulus of elasticity of 110 kg/mm² at 20°C and an elongation of 260%.

Separately, the above-obtained aqueous dispersion was subjected to spray drying in a drying oven at 120°C to give a dry powder. This powder was washed with methanol, then dried and placed in dimethylformamide (DMF) in an amount to give a 10% by weight solution. However, the powder partly remained undissolved and gave a dispersion in the DMF solvent. This dispersion was spread over a polypropylene sheet and the solvent was evaporated at room temperature over 24 hours, followed by further 24 hours of drying at 80°C. The film obtained had a thickness of 23 µm, and the residual DMF in the film as determined by methanol extraction and gas chromatographic determination of the extract was not more than 0.1% by weight relative to the film weight. Determination of the mechanical characteristics of this film showed that its modulus of elasticity was 121 kg/mm² at 20°C and its elongation was 205%.

### Example 2

A pigment paste was prepared by mixing and dispersing 10.0 parts by weight of water, 5.3 parts by weight of the dispersant SN5027 (product of San-Nopco), 0.3 part by weight of the antifoam FS013B (product of Dow Corning), 4.0 part by weight of ethylene glycol, 0.1 part by weight of 28% aqueous ammonia and 70.0 parts by weight of titanium oxide (Tipaque CR97, product of Ishihara Sangyo) in a sand mill. Then, 0.6 part by weight of 28% aqueous ammonia was added to 75.6 parts by weight of the aqueous dispersion of fluorine-containing resin prepared in Example 1, and 24.1 parts by weight of the pigment paste was admixed with 5.1 parts by weight of diethyl adipate, 0.1 part by weight of the antifoam FS013B (product of Dow Corning) and 1.9 parts by weight of a 10% aqueous solution of the thickening agent Adekanol UH420. The mixture was stirred at 400 rpm for 1 hour to give a white paint. The composition was spread over a glass sheet and treated in the same manner as in Example 1 to give a white film. Typical mechanical characteristics of this film are shown in Table 1. The measurement items and test methods were as follows.
Gloss: The composition obtained was spread over a glass sheet to a film thickness of 20 µm using an applicator and, after one week of drying at room temperature, the gloss was measured using a glossmeter (product of Suga Shikenki).
Dirt and stain removability: The white film obtained was affixed to an aluminum sheet using a bilaterally adhesive tape, an aqueous dispersion of carbon was applied by spraying to the exposed surface and, after 2 hours of drying in a dryer at 40°C, the film surface was washed with running water using a brush. After drying, the color change resulting from the remaining carbon was determined by measuring the color difference using a Minolta model DP-300 color difference meter and expressed in terms of ΔE.
Flexibility test: The white film obtained was subjected to flexibility testing according to JIS K 5400 in a constant-temperature room maintained at 5°C. The judgment was made in terms of the minimal mandrel diameter expressed in milliliters at which the film did not undergo cracking. The results are shown in Table 1. A smaller numerical value indicates a smaller surface curvature down to which the film can bend according thereto at the time of affixing.
Weather resistance: The white film obtained was allowed to stand in an acceralated weathering resistance testing apparatus (SUV) for 1,000 hours and the gloss retention (%) as compared between before and after standing was determined.

### Example 3

A 200-ml stainless autoclave equipped with a stirrer was charged with 20.0 g of cyclohexyl vinyl ether (CHVE), 4.5 g of a macromonomer having a hydrophilic site (PKA 5003, product of Nippon Oil and Fats), 11.4 g of ethyl vinyl ether, 66.1 g of deionized water, 0.35 g of ammonium perfluorooctanoate (emulsifier), 0.35 g of potassium carbonate (K₂CO₃), 0.02 g of sodium hydrogen sulfite (NaHSO₃) and 0.08 g of ammonium persulfate (initiator). Nitrogen gas was introduced to a pressure of 3.5 kg/cm² with ice cooling, followed by degassing. The pressurization and degassing procedure was repeated twice and then degassing was effected until 10 mmHg, to thereby eliminate the dissolved oxygen. Then, 38.0 g of chlorotrifluoroethylene (CTFE) was charged and the reaction was carried out at 30°C for 12 hours, whereby an aqueous dispersion of Synthesis Example 5 was obtained. The aqueous dispersion obtained had a solids content of 48% and an average particle size of 180 nm. The resin obtained was insoluble in THF.

A white film was produced in the same manner as in Example 2 and subjected to white film physical properties measurements. The results are shown in Table 1.

### Example 4

A 200-ml four-necked flask equipped with a stirrer, condenser and thermometer was charged with 100 g of the aqueous dispersion of fluorine-containing resin obtained in Synthesis Example 1 and then 1.5 g of the reactive emulsifier Eleminol JS2 (product of Sanyo Chemical Industries) was added. The flask contents were heated on a water bath with stirring and, when the flask temperature reached 80°C, an emulsion of a mixture of 32.0 g of methyl methacrylate (MMA) and 1.7 g of methoxypolyethylene glycol methacrylate RMA 450M (product of Nippon Nyukazai) in 10 g of a 0.5% by weight aqueous solution of JS2 was added dropwise over 1 hour. Immediately thereafter, 1 ml of a 2% by weight aqueous solution of ammonium persulfate was added for initiating the reaction. At 3 hours after initiation of the reaction, the flask inside temperature was raised to 85°C, and that temperature was maintained for 1 hour and then cooled and, after pH adjustment to 7 with aqueous ammonia, the reaction mixture was filtered through a 300-mesh wire gauze to give a pale white aqueous dispersion of fluorine-containing resin. The solids concentration was 5% and the average particle size was 157 nm. The resin obtained was insoluble in THF.

A film was tested for properties in the same manner as in Example 2. The results shown in Table 1 were obtained.

### Example 5

A 200-ml four-necked flask equipped with a stirrer, condenser and thermometer was charged with 100 g of the aqueous dispersion of fluorine-containing resin obtained in Synthesis Example 1 and then 1.5 g of the reactive emulsifier Eleminol JS2 (product of Sanyo Chemical Industries) was added. The flask contents were heated on a water bath with stirring and, when the flask temperature reached 80°C, an emulsion of a mixture of 50.0 g of methyl methacrylate (MMA), 0.25 g of laurylmercaptan and 1.7 g of methoxypolyethylene glycol methacrylate RMA 450M (product of Nippon Nyukazai) in 10 g of a 0.5% by weight aqueous solution of JS2 was added dropwise over 1 hour. Immediately thereafter, 1 ml of a 2% by weight aqueous solution of ammonium persulfate was added for initiating the reaction. At 3 hours after initiation of the reaction, the flask inside temperature was raised to 85°C, and that temperature was maintained for 1 hour and then cooled and, after pH adjustment to 7 with aqueous ammonia, the reaction mixture was filtered through a 300-mesh wire gauze to give a pale white aqueous dispersion of fluorine-containing resin. The solids content was 5% and the average particle size was 157 nm. The resin obtained had an intrinsic viscosity of 2.3 dl/g as determined in THF at 30°C.

A film was tested for properties in the same manner as in Example 2. The results shown in Table 1 were obtained.

### Comparative Example 1

A pale white aqueous dispersion of fluorine-containing resin was obtained by proceeding in the same manner as in Example 3 except that n-laurylmercaptan was used in an amount of 0.5 g. The solids content was 45% and the average particle size was 158 nm. The intrinsic viscosity of the resin obtained was 1.8 dl/g as determined in THF at 30°C.

A film was tested for properties in the same manner as in Example 2. The results shown in Table 1 were obtained.

### Comparative Example 2

A pale white aqueous dispersion of fluorine-containing resin was obtained by proceeding in the same manner as in Example 1 except that a mixed monomer composed of 8.5 g of MMA and 8.5 g of butyl acrylate was used in lieu of 17 g of MMA. The solids content was 46% and the average particle size was 163 nm. The resin obtained was insoluble in THF.

A film was tested for properties in the same manner as in Example 2. The results shown in Table 1 were obtained.

### Example 6

A composition prepared by adding 4.6 g of diethyl adipate as a film-forming auxiliary and 1 g of a 10% aqueous solution of Adekanol UH420 (product of Asahi Denka Kogyo) as a thickening agent to 100 g of the aqueous resin dispersion obtained in Example 1 was spread over a glass sheet (50 x 50 cm) using an applicator giving a width of 40 cm and a thickness of 4 mils, followed by 2 hours of drying in a dryer at 50°C. Then, the acrylic emulsion type adhesive Viniblan 7040 (product of Nisshin Chemical) was spread over the fluorine-containing resin film prepared on the 4-mil applicator. After 2 hours of drying in a dryer at 50°C, a release paper was placed on the acrylic adhesive layer to give a fluorine-containing resin film laminate.

The fluorine-containing resin film laminate obtained was affixed to an indoor wall surface. Then, scribbling was made on the laminate surface with oil-based magic markers (red, blue and black), followed by 24 hours of standing. Thereafter, wiping with ethanol completely eliminated the marker ink figures. The film surface gloss remained unchanged.

**Table 1**

| | Ex. 2 | Ex. 3 | Ex. 4 | Ex. 5 | Compar. Ex. 1 | Compar Ex. 2 |
|---|---|---|---|---|---|---|
| Modulus of elasticity of film (kg/mm²) | 124 | 73 | 154 | 177 | 74 | 46 |
| Film elongation (%) | 210 | 150 | 83 | 54 | 32 | 280 |
| White film gloss | 75 | 72 | 75 | 74 | 76 | 73 |
| Stain removability (ΔE) | 5.6 | 9.7 | 2.3 | 1.8 | 2.2 | 21.2 |
| Flexibility (mm) | 2 | 2 | 2 | 3 | 4 | 2 |
| Weather resistance (gloss retention %) | 92 | 73 | 91 | 85 | 71 | 82 |

### Examples 7 to 9

Colored films were prepared in the same manner as in Example 3 except that 8 parts by weight each of commercial pigment pastes were respectively used in lieu of the white pigment paste. The pigment pastes used and the results obtained are shown in Table 2.

In Table 2, "E-13" denotes AF Color E-13 (organic red) (product of Dainichiseika), "E-1" denotes AF Color E-1 (organic blue) (product of Dainichiseika), and "E-30" denotes AF Color E-30 (inorganic yellow) (product of Dainichiseika).

**Table 2**

| | Example 7 | Example 8 | Example 9 |
|---|---|---|---|
| Pigment paste | E-13 | E-1 | E-30 |
| Modulus of elasticity of film (kg/mm²) | 120 | 121 | 110 |
| Film elongation (%) | 205 | 207 | 183 |
| Film gloss | 83 | 81 | 78 |
| Stain removability (Δ E) | 6.0 | 6.4 | 5.9 |
| Flexibility (mm) | 2 | 2 | 2 |
| Weather resistance (gloss retention %) | 84 | 97 | 81 |

### Example 10

A rectangular piece, 7.5 cm by 5 cm, provided with a central circular aperture 4 cm in diameter was cut out from the white film obtained in Example 2. A circular piece, 4 cm in diameter, was cut out from the red film obtained in Example 7 and fit in the circular aperture of said white film piece to give a marking film representing the national flag of Japan. Vinyblan 7040 (product of Nisshin Chemical) was applied to the reverse side of said marking film using a 4-mil applicator. After 24 hours of drying at room temperature, the film was affixed to an aluminum sheet and subjected to weather resistance testing on an SUV tester.

After 1,000 hours, the surface gloss retention was not less than 90% for the respective colored portions.

### Example 11

The film obtained in Example 6 was cut to a size of A4, and the mark of Daikin Industries, Ltd. was printed on the surface thereof using a bubble jet printer (Canon model BJC600J). After 2 hours of drying at 50°C, a clear paint composition was applied to the printed surface using a 4-mil applicator, followed by 2 hours of drying in a dryer at 50°C. Then, an adhesive was applied to the reverse side in the same manner as in Example 6 to give a fluorine-containing resin film laminate.

The printability with inks was good, without oozing out due to the clear paint used in preparing the fluorine-containing resin film laminate. A film having good decorative quality was thus obtained.

### INDUSTRIAL APPLICABILITY

The fluorine-containing resin film of the present invention, which has the above-mentioned constitution, is excellent in weather resistance and in dirt and stain removability and capable of being printed on the surface thereof. It does not need the use of any organic solvent in the stage of production thereof but can be obtained with such processability as to give a thin film form thereto. The adhesive sheet used the fluorine-containing resin film of the present invention is excellent in weather resistance, dirt and stain removability and processability and, therefore, is very suited for use as a marking film, etc.

## Claims

1. A fluorine-containing resin film comprising a fluorine-containing resin film made by the technique of casting and having modulus of elasticity of not less than 50 kg/mm² and an elongation of not less than 50%.

2. The fluorine-containing resin film according to Claim 1 obtained by spreading an aqueous dispersion of fluorine-containing resin comprising a fluorine-containing resin dispersed in an aqueous medium over a nonadhesive substrate, followed by drying.

3. The fluorine-containing resin film according to Claim 2, wherein the resin is a VdF-based composite resin obtained by seed polymerization of a radical-polymerizable unsaturated monomer in an aqueous medium in the presence of VdF-based resin particles.

4. The fluorine-containing resin film according to Claim 1, 2 or 3, wherein the fluorine-containing resin in the aqueous dispersion is solvent-insoluble.

5. An adhesive sheet which comprises the fluorine-containing resin film according to Claim 1, 2, 3 or 4, and an adhesive layer on at least one side thereof.

6. A colored adhesive sheet which comprises the adhesive sheet according to Claim 5, wherein a pigment / pigments is/are dispersed in the fluorine-containing resin.

7. An adhesive sheet for decorative use which comprises the adhesive sheet according to Claim 5 having a design printed on the surface thereof.

8. A marking film which comprises the adhesive sheet according to Claim 5.
